(19)

Europäisches
Patentamt
European
Patent Office
Office européen
des brevets

(11) **EP 2 418 304 A1**

(12) **EUROPEAN PATENT APPLICATION**

(43) Date of publication:
 **15.02.2012 Bulletin 2012/07**

(51) Int Cl.:
 *C25B 1/02* (2006.01)  *C25B 1/10* (2006.01)
 *C25B 9/18* (2006.01)  *C25B 15/00* (2006.01)

(21) Application number: **11176763.8**

(22) Date of filing: **05.08.2011**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**

(30) Priority: **09.08.2010 GB 1013368
 23.10.2010 GB 1019831**

(71) Applicant: **Ion Science Limited
 Fowlmere,
 Cambridge SG8 7UJ (GB)**

(72) Inventors:
 • **Dean, William
 Cambridge, Cambridgeshire CB1 2LG (GB)**
 • **Powell, Stephen
 Cambridge, CB22 3DQ (GB)**

(74) Representative: **Harrison IP Limited
 1st Floor, Box Tree House
 Northminster Business Park
 Northfield Lane
 York,
 YO26 6QU (GB)**

(54) **Hydrogen generation**

(57)     A hydrogen generator includes at least two electrolytic cells (1, 17), each comprising a membrane electrode assembly incorporating a solid polymer electrolyte (2a). The membrane electrode of a first cell (1) is exposed to water and the hydrogen produced in this cell contacts the cathode surfaces (2c) of the successive electrolytic cells (17), wherein any water entrained in or carried over with the hydrogen produced in the first cell is the only significant feedstock for the successive electrolytic cells.

    Preferably, the first and second cells share a common chamber enclosing the respective electrodes. Hydrogen generated by the first cell (1) diffuses into an expanded polytetrafluoroethylene tube (28) adjacent to the cathode. The tube (28) discharges into a space (32) abutting the cathode of the second cell (17)

Figure 1

EP 2 418 304 A1

**Description**

Field of the Invention

This invention concerns the electrolysis of water to form hydrogen.

Background of the Invention

Hydrogen is used in large quantities in oil refining, for example in the breaking down large hydrocarbon molecules into smaller ones in the process known as hydrocracking. It is also used in manufacture of ammonia by the Haber process. Such hydrogen is usually sourced from the reaction of a fossil fuel, typically coal or methane, with water.

Hydrogen is also required as a chemical intermediate in various synthetic processes. In semiconductor manufacture it is occasionally required in an ultrapure state. It is used as a specialist fuel source, for example in the operation of flame ionisation detectors. Hydrogen is also widely recognised as a clean alternative to fossil fuels. The sole product of its combustion in air is water, and water is a readily available source of hydrogen.

A few per cent of the hydrogen used worldwide is produced by water electrolysis. The process requires the application of a positive electric potential to one electrode, known as an anode, relative to another electrode, known as the cathode, in between which is either an acid or alkaline electrolyte. This applied potential is known hereinafter for convenience as the cell potential. In acid electrolyte, the electrode reactions are:

$$H_2O => 2H^+ + \tfrac{1}{2} O_2 + 2e \text{ at the anode, and}$$

$$2H^+ + 2e => H_2 \text{ at the cathode.}$$

The minimum cell potential required to electrolyse the water is 1.229 V. A cell operating at this potential is said to have a cell efficiency of 100%, and since the hydrogen is produced at the rate of one molecule per two electrons passed through the cell, this corresponds to producing hydrogen at a rate of 33 kW.hr per kilogram hydrogen. Any inefficiency in hydrogen production is manifest as waste heat.

Cell efficiencies of at least 80% have been reported for alkaline water electrolysis which is commonly used for large scale hydrogen production. However, according to the present art, alkaline electrolytes are typically liquids, which afford a particular risk of gas migration between the anode and cathode, and often carry a hazard associated with their being highly caustic.

Efficiencies of at least 60% can be achieved by acid electrolysis using proton conducting polymer electrolytes in sheet form, such as perfluorinated sulfonic acid polymer known under the trade name Nafion 114 of Dupont Chemicals. The electrolyte contains an open network of channels and inverted micelles though which water is freely transported and along whose walls protons readily move under an electric field. There exists substantial art in supporting on or just within both polymer electrolyte faces a layer of particles of a metal or metal oxide catalyst often mixed with graphite to form what is referred to hereinafter as a membrane electrode assembly. In contact with suitable electric contacts and subjected to a sufficient electric potential, the surfaces of the membrane electrode assembly are caused to be electrically conductive and conducive to the production and evolution of oxygen and hydrogen at an anode and cathode respectively formed thereby. Typically, the anode contains as one surface ingredient iridium oxide, and the cathode contains as one surface ingredient platinum. Water, removed from the electrolyte by electrolysis and evaporation into the produced hydrogen and oxygen, can be simply replaced by contact of liquid water with the electrolyte. Under electrolysis, liquid water is deposited at the cathode side, despite the consumption of water at the anode, in a process known as electro-osmosis.

A particular advantage of the use of a membrane electrolyte assembly in electrolysis of water is in the physical separation of produced hydrogen and oxygen. Any admixture of the two gases in the vicinity of the cathode or anode substantially reduces the cell efficiency, because hydrogen at an anode is more readily oxidised to protons than water to oxygen, and oxygen at a cathode is more readily reduced to water than protons to hydrogen. Moreover, mixtures of pure hydrogen and oxygen, particularly in the ratio of 2:1 in which they are formed by electrolysis, can be explosive. This is a particular concern where it is intended to use the hydrogen in an explosive atmosphere, such as in its being a source for a flame to operate a flame ionisation detector in the detection of gases which may cause an explosion.

Water itself is also known as a catalyst for hydrogen ignition and therefore it is desirable to dry hydrogen from the cathode before admixing it with oxygen. Moreover, downstream of a hydrogen generator it is often convenient for the means of conveyance of hydrogen to be restricted, such as to assure its pressure is controlled during mixing with other gases. The means of conveyance of hydrogen, by way of example, a capillary, may also be restrictive, but engaged downstream of the hydrogen generator with a view to minimising the volume of hydrogen contained within the means of conveyance, such as to ensure a rapid response of a flow of hydrogen delivered remote from the water electrolyser to a change in the electrolyser cell current which regulates hydrogen production. These restrictions are all liable to blockage by water condensate, particularly in view of hydrogen exiting the cell being warm and therefore prospectively being inclined to condensation. For similar reasons, it may be desirable to dry electrochemically produced oxygen, particularly if the oxygen is to be premixed with hydrogen before its combustion in a flame ionisation detector, as can be desirable in testing gases where the oxygen content of the test gas is low, such as in testing smoke stack gas.

Water-free hydrogen may be desirable in other applications too, for example in its use as a feedstock for ultrapure hydrogen purification through a palladium membrane that may be degraded by the presence of water.

Conventionally, the hydrogen stream is dried using a desiccant such as silica gel.

WO 01/19728, The Robert Gordon University, describes the use of a cellulose acetate membrane to separate hydrogen from entrained water.

In US patent 6,096,178, Amirov et al. describe the use of a Peltier in removal of water from electrolytically produced hydrogen for use in a flame ionisation detector. Whilst very effective, a Peltier requires considerable electrical power and therefore is a distinct disadvantage in a portable and battery operated tool. Further, the condensed water trapped by any means needs to be removed and is liable to migrate where it is not wanted when the Peltier cooler is turned off. The present invention enables electrochemically produced hydrogen to be dried not only more efficiently, but also so as to eliminate the need for condensate removal. The present invention confers an increased efficiency on a hydrogen electrolyser, and affords a diagnostic for monitoring the dryness of hydrogen produced by the water generator.

Summary of the Invention

According to one aspect of the present invention, there is provided a hydrogen generator which includes a cascade of at least two electrolytic cells, each comprising a membrane electrode assembly incorporating a solid polymer electrolyte polarized so as to generate hydrogen from water at a cathode and oxygen at an anode, in which the membrane electrode of a first cell is at least partially exposed on one or both sides to a supply of liquid water and the hydrogen produced in this cell contacts the cathode surfaces of the or each successive electrolytic cell, wherein any water entrained in or carried over with the hydrogen produced in the first cell is the only significant feedstock for the or each successive electrolytic cell.

According to another aspect of the present invention, there is provided a method of generating dry hydrogen by electrolysis of water in a cascade of at least two electrolytic cells, each cell comprising a membrane electrode assembly incorporating a solid polymer electrolyte polarized so as to generate hydrogen from water at a cathode and oxygen at an anode, in which the membrane electrode of a first cell is at least partially exposed on one or both sides to a supply of liquid water and the hydrogen produced in this cell contacts the cathode surfaces of the or each successive electrolytic cell, wherein any water entrained in or carried over with the hydrogen produced in the first cell is the only significant feedstock for the or each successive electrolytic cell.

In one aspect, the invention provides a device to generate dry hydrogen which includes at least two water electrolyzing cells, each comprising a membrane electrode assembly incorporating a solid polymer electrolyte, polarized so as to generate hydrogen at a cathode and oxygen at an anode, in which the first cell membrane is at least partially exposed on one or both sides to a supply of liquid water, the hydrogen produced in this cell being caused by wall members to flow over the cathode surfaces of one or more successive water electrolyzing cells deprived of water except as is carried over in the produced hydrogen stream from one cell to the next, so as to cause hydrogen exiting the final such cell to be sufficiently dry for some subsequent use.

Preferably, the first and second cells share a common chamber enclosing the respective electrodes. Electrode surfaces of the same polarity face each other. In order to reduce the quantity of water being carried from the first to the second cell, the common chamber incorporates a semi-porous membrane between the respective cathodes.

Alternatively. a space abutting the cathode of the first cell may incorporate a semi-porous membrane adjacent to said cathode and communicating with a space abutting the cathode of the second cell. In a particularly advantageous configuration, the inner enclosure is essentially tubular.

Preferably, the semi-porous membrane is hydrophobic.

In order to reduce the amount of water entrained in the hydrogen exiting the first cell, a space adjacent to the cathode of the first cell may contain loose, porous, hydrophobic material, for example in the form of powder, regular or irregular particles, flakes, spheres or pellets.

A particularly advantageous hydrophobic material for the semi-porous membrane or the loose pellets is expanded polytetrafluoroethylene.

Preferably, electrical contact is made with the membrane electrode assembly by means of at least one electrically conducting mesh which overlies the electrode surfaces in electrical contact therewith. In particular, a relatively fine mesh directly overlies the electrode surfaces and a second, relatively coarse mesh overlies the fine mesh. Relatively fine or relatively coarse refers to the pitch of the respective meshes relative to each other. Means are provided to urge the relatively stiff coarse mesh against the fine mesh, resulting in the fine mesh making intimate contact with the membrane electrode assembly, in order to disperse a relatively uniform force between the mesh and the membrane electrode assembly.

Additionally, the invention provides a device to generate dry oxygen, wherein the oxygen generated at the anode of a wetted cell is similarly caused to flow over increasingly dry anode surfaces.

Hereinafter for convenience the water-wetted electrolysis cell is referred to as the primary cell, the evolved gas being introduced into a secondary cell, and from thence to a tertiary cell, and so on.

In every embodiment of the invention, it is necessary for there to be some region of confinement of water in the primary cell in contact with its membrane electrode assembly. It is usually convenient for this contact to be made at the cathode. It is frequently an advantage to confine such water with a material such as porous PTFE which allows for the facile passage of gas, but prevents passage of water droplets from one location to another.

It may be convenient for all cells provided according to the present invention to be electrically operated so as to deliver a controllable total operating current by which means the flow of hydrogen produced may also be controlled. By way of example, a fairly precise flow of hydrogen may be required for the stable maintenance of a hydrogen flame. That flow of hydrogen may need to be adjusted to ensure flame stability during different times of the flame's use, such as whenever it is ignited or when it is operating in particular ambient conditions of heat cold and such like. It is also frequently convenient for the cells to be caused to operate at the same cell potentials. It is typically deleterious for cells to be driven at cell potentials exceeding 3 V.

According to a further aspect of the present invention, there is provided a hydrogen generator as described above in which all the cells are operated at substantially the same cell potentials, which generator includes means for measuring the ratio of respective currents passing through the first and second cells. The cell potentials and the ratio of the respective currents passing through the first and second cells indicate the humidity of the hydrogen produced in the second cell and is also diagnostic of operation of the hydrogen generator.

It should be noted that the invention relies upon a particular quality of acid polymer electrolytes in becoming increasingly water adsorbing as they become increasingly dry. The invention encompasses the drying of hydrogen from a state of complete humidification to hydrogen that may exit the hydrogen generator either partially dried or extremely dry.

An alternative configuration of the hydrogen generator comprises an elongated membrane electrode assembly with the hydrogen passing along the cathode surface. Entrained water can be adsorbed as the hydrogen contacts the length of the electrode assembly. As indicated above, the hygroscopic properties of the acid polymer electrolyte can result in a concentration gradient of adsorbed water along the length of the electrode assembly. In effect, this configuration is functionally equivalent to a cascade of discrete electrolytic cells.


Brief Description of the Drawings

The invention will now be described by reference to the Figures wherein:-

Figure 1 shows a schematic of an embodiment of one aspect of the invention in which hydrogen is dried by a two cell configuration sharing a common gaseous chamber;
Figure 1a shows an enlarged view of a membrane electrode assembly;
Figure 2 shows a schematic of an embodiment of another aspect of the invention in which hydrogen is dried by a two cell configuration in tandem; and
Figure 3 shows a schematic of an embodiment of a further aspect of the invention in which hydrogen is dried by a two cell configuration sharing a common gaseous chamber and the first cell is associated with a tubular membrane


Description of the Preferred Embodiments

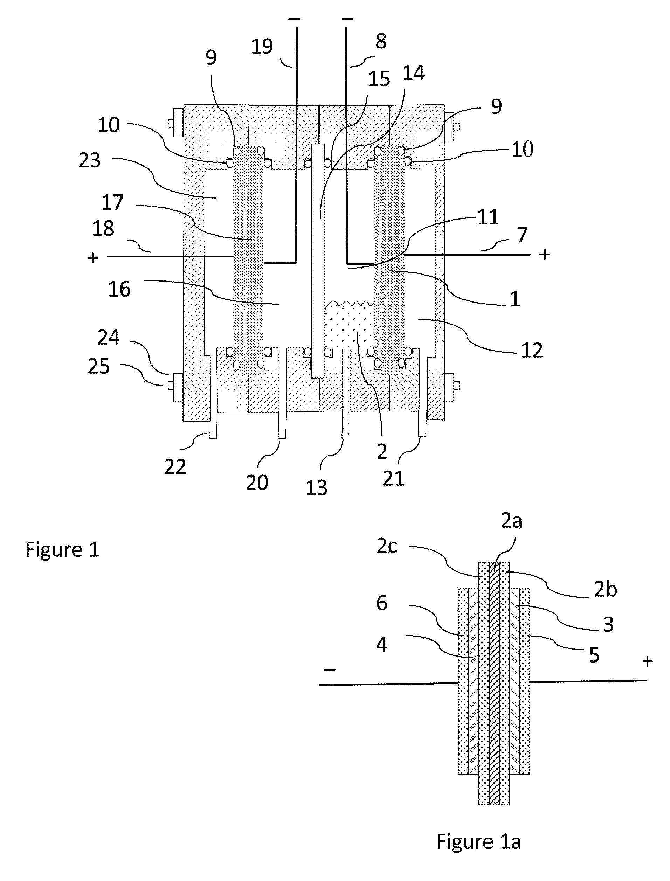

In Figure 1, a primary cell comprising membrane electrode assembly and supporting current collecting members, 1, in contact with water 2 is depicted in detail in Figure 1a. The membrane electrode assembly comprises a solid polymer electrolyte 2a, and integral anodic coating 2b conducive to oxygen generation, and integral cathodic coating 2c conducive to hydrogen generation. Overlaying 2b and 2c are fine electrically conducting meshes 3 and 4 respectively. Overlaying meshes 3 and 4 are more robust and rigid electrically conducting screens 5 and 6, to which are welded non-corrosive contact wires annotated '+' and '-' in Figure 1a, corresponding, for example, to leads 7 and 8 respectively in Figure 1. Preferably, meshes 3 and 4 and screens 5 and 6 are substantially made of titanium.

Turning to Figure 1, the whole assembly 1 is held in place by virtue of o-rings 9, which provide a gas tight seal between the membrane electrode assembly and cell support members, and by o-ring 10, which imparts a force upon rigid support screens 5 and 6, by which means electrical resistances between all members of the assembly shown in Figure 1a are kept low.

Electrical polarization of the assembly applied to leads 7 and 8 as shown by the plus and minus signs in Figures 1 and 1a causes hydrogen to be evolved in the watery gaseous enclosure 11 and oxygen in the gaseous enclosure 12.

A presence of water 2 is maintained in enclosure 11 by means of a water entry port 13. A semi-porous membrane, 14, is held in place by o-rings such as 15. The membrane pore size is sufficient so as to enable hydrogen passage but insufficient to enable substantial water passage though the porous membrane. Hydrogen passing though the membrane 14 enters secondary cell gaseous chamber 16, where it is dried by contact with the cathodic side of the secondary electrolysis cell 17 which is of similar construction to primary cell 1, noting that the hydrogen generating, cathodic side of the cell 17 faces cathodic side of cell 1, the electrical lead 18 is positively polarized relative to the secondary cell electrical lead 19, and the components of cell 17 are as shown in Figure 1a but oppositely oriented. Dried hydrogen exits enclosure 16 at gas exit port 20. Further ports 21 and 22 enable venting of oxygen from oxygen enclosures 12 and 23 respectively. The whole assembly is held in place by nuts such as 24 and threaded sections such as 25.

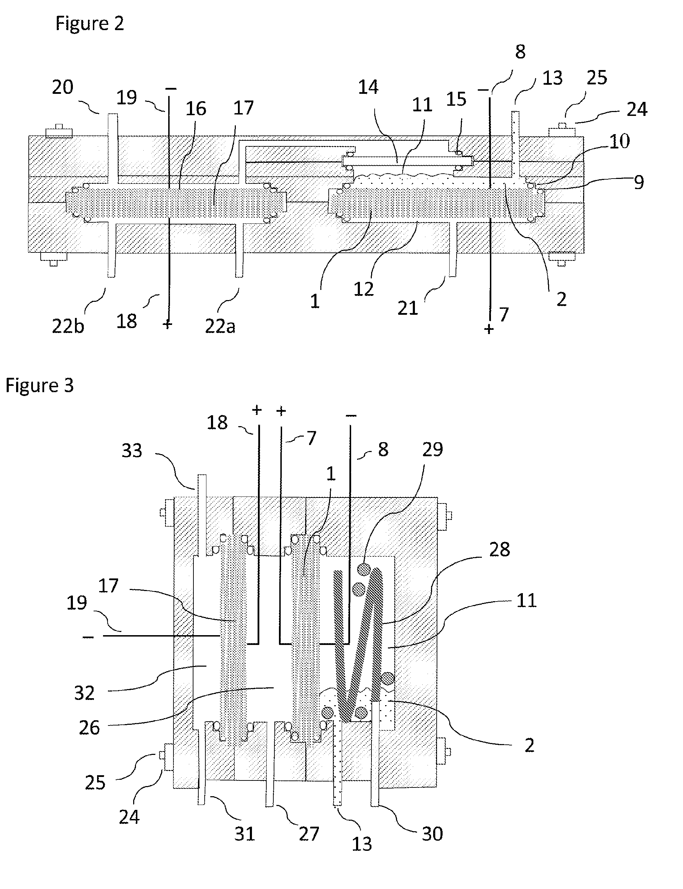

In Figure 2, a different construction is shown which illustrates a similar aspect of the invention using components of largely the same principles as in Figure 1 but with the two cells in tandem. The representation also shows inlet and outlet secondary oxygen enclosure ports 22a and 22b respectively enabling gas exiting primary oxygen enclosure 12 through port 21 to be dried. (For clarity, the connection between ports 21 and 22a has been omitted.)

In Figure 3, a construction provided by the invention is shown schematically in which oxygen generated at the primary and secondary cells 1 and 17 enters a common chamber 26, exiting at gas port 27. The hydrogen generated in enclosure 11 is separated from water 2 also present in the enclosure by diffusion through the walls of a tube 28 made from a hydrophobic material, such as expanded polytetrafluoroethylene (ePTFE) supplied by Zeus or Gortex.

Tube 28 is closed at one end and connected to a hydrogen exit 30 at the other. This moist hydrogen is then conveyed via gas entry port 31 to enclosure 32 also containing hydrogen generated at the secondary cell 17. The combined hydrogen, now substantially dry due to the consumption of water by cell 17, exits enclosure 32 at port 33.

When a bubble of gas is formed in the enclosure 11, the pressure is increased therein. It is an advantage to ameliorate this pressure increase as it is prone to oppose the supply of water to the chamber, and to force water through the semi-porous membrane material. In view of their tendency to coalesce bubbles of gas, beads 29 of expanded PTFE (ePTFE) or a similarly hydrophobic semi-porous material may be used to reduce this increase of pressure caused by bubble formation, as shown in Figure 3. In addition, the presence of beads on which gas bubbles have coalesced provides contiguous gas paths between the hydrogen-forming electrode surface and the semi-porous membrane through which hydrogen moves, which also leads to a decrease in the pressure increase caused in the hydrogen enclosure 11. A typical pellet size might be 2 mm, approximately spherical.

The invention will now be described by way of how it may be operated. Referring to Figures 1, 2 and 3, a supply of de-ionised water, which could by way of example be a collapsible bag under constraint, admits water into watery gaseous chamber 11 via port 13. In Figures 1 and 2, displaced hydrogen exits through semi-porous membrane 14 into gaseous enclosure 16 and then exits through gas port 20. In Figure 3, displaced hydrogen exits through the walls of tube 28 and port 30.

Electrical circuitry, not illustrated, causes a current of $I_1$ amps to flow through the cell from lead 8 to lead 7. Typically, a flow through the primary cell is around 1 A per square centimeter, achieved by applying a typical maximum voltage to lead 7 of +3 V relative to lead 8. The primary cell provides a flow of hydrogen $F_1$, which is typically the major fraction of hydrogen demanded by a device engaging the invention. The primary cell provided by the invention is sized accordingly.

In Figures 1 and 2, moist hydrogen generated in enclosure 11 is caused by pressure differential induced by its generation to move through the membrane 14 into enclosure 16 where it is exposed to the cathode of secondary cell 17. In Figure 3, displaced hydrogen exits through the walls of tube 28 and port 30, which is connected by a means of conveyance, such as a PTFE tubing, to gas entry port 31 into enclosure 32 where it is exposed to the cathode of secondary cell 17.

Electric circuitry, not shown, causes an electric potential, typically not exceeding +3 V, to be applied to lead 18 relative to lead 19. This causes a flow of current, $I_2$, arising from the electrolysis of water which has at least in part been adsorbed from the hydrogen gas stream by the electrolytic membrane in the secondary cell. The current $I_2$ is typically some 2-10% of the current $I_1$ generated in the primary cell. The exact ratio of currents $I_2:I_1$ provides a useful diagnostic indication of the humidity of hydrogen presented to the secondary cell. If, for example, the hydrogen flowing from the secondary cell enclosure becomes wet due to a breach in the membrane between the primary and secondary cells, then $I_2:I_1$ will be higher than when, for example, the gas presented to the second cell is merely moist. Correspondingly, if flow of hydrogen to the secondary cell is blocked, $I_2:I_1$ will decrease. It should be noted that during typical operation all the current $I_2$ moving through the secondary cell will generate a flow of hydrogen $F_2$ in addition to the flow of hydrogen $F_1$ generated in the primary gas stream. Therefore, the electrical and electronic circuitry may be contrived to deliver a constant current supply to the several cells engaged according to the invention, as that total current will determine the total flow of hydrogen $F_{total}$ generated by the invention.

$$F_{total} = 0.127 \ I_{total}$$

when flow is measured in mL/s at 1 bar and 20 degC and current in amps.

Exactly a flow of $F_{total}/2$ of oxygen is concurrently generated by the several cells provided according to the present invention.

Thus the invention not only provides for the drying of an electrolytically generated hydrogen stream, but for the complete removal of the water, for its gainful use as feedstock to deliver more hydrogen, and for a diagnostic of correct or normal operation of the gas generator. In such respects the present invention provides for dry hydrogen generation which is reliable, requires no waste water disposal, which is electrically efficient, and which can be monitored.

Use of a tubular membrane, as exemplified by Figure 3, has the further advantage that the hydrogen generator may be less orientation-dependent than existing electrolytic cells.

## Claims

1. A hydrogen generator which includes a cascade of at least two electrolytic cells, each comprising a membrane electrode assembly (1) incorporating a solid polymer electrolyte (2a) polarized so as to generate hydrogen from water at a cathode (2c) and oxygen at an anode (2b); **characterised in that** the membrane electrode (1) of a first cell is at least partially exposed on one or both sides to a supply of liquid water (2) and the hydrogen produced in this cell contacts the cathode surfaces (2c) of the or each successive electrolytic cell, wherein any water entrained in or carried over with the hydrogen produced in the first cell is the only significant feedstock for the or each successive electrolytic cell.

2. A hydrogen generator as claimed in Claim 1 wherein the first and second cells share a common chamber (11) enclosing the respective electrodes and electrode surfaces of the same polarity face each other, and wherein the hydrogen generator incorporates a hydrophobic semi-porous membrane (14) between the respective cathodes.

3. A hydrogen generator as claimed in Claim 1 wherein a space abutting the cathode (2c) of the first cell incorporates a hydrophobic semi-porous inner enclosure (28) adjacent to said cathode and communicating with a space (32) abutting the cathode of the second cell (17).

4. A hydrogen generator as claimed in Claim 3 wherein the inner enclosure (28) is essentially tubular.

5. A hydrogen generator as claimed in any one of Claims 2 to 4 wherein the semi-porous membrane (14) or inner enclosure (28) is expanded polytetrafluoroethylene.

6. A hydrogen generator as claimed in any one of the preceding claims wherein a space (11) adjacent to the cathode (2c) of the first cell contains loose, porous, hydrophobic material (29).

7. A hydrogen generator as claimed in any one of the preceding claims wherein the solid electrolyte (2a) is a proton conducting polymer.

8. A hydrogen generator as claimed in any one of the preceding claims wherein oxygen produced in the first cell contacts the anode surfaces (2b) of the or each successive electrolytic cell.

9. A hydrogen generator as claimed in any one of the preceding claims in which all the cells are operated at substantially the same cell potential, which generator includes means for measuring the ratio of respective currents passing through the first and second cells.

10. A method of generating dry hydrogen by electrolysis of water in a cascade of at least two electrolytic cells, each cell comprising a membrane electrode assembly (1) incorporating a solid polymer electrolyte (2a) polarized so as to generate hydrogen from water at a cathode (2c) and oxygen at an anode (2b), in which the membrane electrode (1) of a first cell is at least partially exposed on one or both sides to a supply of liquid water (2) and the hydrogen produced in this cell contacts the cathode surfaces (2c) of the or each successive electrolytic cell, wherein any water entrained in or carried over with the hydrogen produced in the first cell is the only significant feedstock for the or each successive electrolytic cell.

**11.** A method of operating a hydrogen generator as claimed in Claim 10 wherein the first and second cells share a common chamber (11) enclosing the respective electrodes and electrode surfaces of the same polarity face each other.

**12.** A method of operating a hydrogen generator as claimed in Claim 10 wherein a space (11) abutting the cathode (2c) of the first cell incorporates an essentially tubular semi-porous inner enclosure (28) adjacent to said cathode and communicating with a space (32) abutting the cathode of the second cell.

**13.** A method of operating a hydrogen generator as claimed in any one of Claims 10 to 12 wherein a space (11) adjacent to the cathode (2c) of the first cell contains loose, porous, hydrophobic material.

**14.** A method of operating a hydrogen generator as claimed in any one of Claims 10 to 13 wherein the ratio of the respective currents passing through the first and second cells indicates the humidity of the hydrogen produced in the second cell.

**15.** A method of operating a hydrogen generator as claimed in any one of Claims 10 to 13 wherein the ratio of the respective currents passing through the first and second cells is a diagnostic of operation of the hydrogen generator.

Figure 1

Figure 1a

Figure 2

Figure 3

EP 2 418 304 A1

EUROPEAN SEARCH REPORT

Application Number

EP 11 17 6763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 389 263 B1 (UNITED TECHNOLOGIES CORPORATION) 26 September 1990 (1990-09-26) * page 2, line 1 - line 44 * * page 3, line 33 - page 6, line 16 * * figures 1-5 * | 1,3,7 | INV. C25B1/02 C25B1/10 C25B9/18 C25B15/00 |
| Y | US 2003/201187 A1 (SPERANZA A JOHN [US] ET AL) 30 October 2003 (2003-10-30) * the whole document * | 1-15 | |
| Y | EP 1 127 960 A1 (MITSUBISHI DENKI K.K.) 29 August 2001 (2001-08-29) * column 1, paragraph 4 - column 2, paragraph 7 * * paragraph [0111] * * claims 1,7,8 * | 1-15 | |

TECHNICAL FIELDS SEARCHED (IPC)

C25B

The present search report has been drawn up for all claims

| Place of search | Date of completion of the search | Examiner |
|---|---|---|
| The Hague | 22 November 2011 | Standaert, Frans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

10

## ANNEX TO THE EUROPEAN SEARCH REPORT
## ON EUROPEAN PATENT APPLICATION NO.

EP 11 17 6763

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2011

| Patent document cited in search report | | Publication date | Patent family member(s) | | Publication date |
|---|---|---|---|---|---|
| EP 0389263 | B1 | 26-09-1990 | DE | 69002359 D1 | 02-09-1993 |
| | | | DE | 69002359 T2 | 11-11-1993 |
| | | | EP | 0389263 A1 | 26-09-1990 |
| | | | ES | 2044430 T3 | 01-01-1994 |
| | | | JP | 3177591 A | 01-08-1991 |
| | | | US | 4950371 A | 21-08-1990 |
| US 2003201187 | A1 | 30-10-2003 | DE | 10317767 A1 | 13-11-2003 |
| | | | JP | 2004003003 A | 08-01-2004 |
| | | | US | 2003201187 A1 | 30-10-2003 |
| | | | US | 2005000800 A1 | 06-01-2005 |
| EP 1127960 | A1 | 29-08-2001 | EP | 1127960 A1 | 29-08-2001 |
| | | | US | 2001017259 A1 | 30-08-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0119728 A

- US 6096178 A, Amirov